# EUROPÄISCHE PATENTSCHRIFT

(11) **EP 2 017 135 B1**
(45) Veröffentlichungstag und Bekanntmachung des Hinweises auf die Patenterteilung: **12.08.2009**
(21) Anmeldenummer: 07014099.1
(22) Anmeldetag: 18.07.2007
(51) Int. Cl.: B60R 13/08

(54) **Hitzeschild**
Heat shield
Bouclier thermique

(43) Veröffentlichungstag der Anmeldung: 21.01.2009
(73) Patentinhaber: REINZ-Dichtungs-GmbH, 89233 Neu-Ulm (DE)
(72) Erfinder: Giaimi, Giacomo, 89077 Ulm (DE)
(74) Vertreter: Tomerius, Isabel

(56) Entgegenhaltungen:
- EP-A- 0 844 139
- DE-A1- 10 116 261
- DE-U1-0202004 019 84
- GB-A- 2 048 169

## Beschreibung

Die Erfindung betrifft einen Hitzeschild zum Abschirmen eines Gegenstandes gegen Hitze und/oder Schall mit wenigstens einer Metalllage, die wenigstens eine Ausnehmung aufweist. Derartige Hitzeschilde werden als Schall- und/oder Hitzeschutz für andere Bauteile verwendet. Hitzeschilde werden beispielsweise in Motorräumen von Kraftfahrzeugen eingesetzt, insbesondere im Bereich der Abgasanlage, um benachbarte temperaturempfindliche Bauteile und Aggregate gegenüber unzulässiger Erhitzung zu schützen. Oft dienen die Hitzeschilde dabei gleichzeitig als Schallschutz. Häufig besteht ein Hitzeschild aus zwei metallischen Lagen mit einer zwischen diesen angeordneten nichtmetallischen Isolationsschicht zur Verbesserung der Dämpfungseigenschaften. Die Isolationsschicht besteht beispielsweise aus Glimmer, temperaturstabilem Papier, anorganischen oder organischen Faserverbundmaterialien oder anderen geeigneten Dämmstoffen. Die metallischen Lagen bestehen üblicherweise aus Stahl, aluminiumplattiertem Stahl oder Aluminium.

Hitzeschilde werden in der Regel mittels Schrauben oder ähnlichen Befestigungsmitteln, die durch eine Öffnung im Hitzeschild geführt werden, an einem Bauteil wie beispielsweise der Karosserie befestigt. Um die Übertragung von Vibrationen vom Bauteil auf den Hitzeschild zu verringern, wird üblicherweise ein Dämpfungselement - zum Beispiel ein Drahtkissen - zwischen Hitzeschild und Bauteil angeordnet. Dennoch lässt sich meist nicht verhindern, dass Körperschall vom Bauteil auf den Hitzeschild übertragen wird. Dieser Körperschall versetzt die Oberflächen der metallischen Lagen des Hitzeschildes in Schwingung, was zum Abstrahlen von unerwünschtem Luftschall durch den Hitzeschild führt. Die gegebenenfalls vorhandene Isolationsschicht weist zwar üblicherweise eine größere Nachgiebigkeit auf als die außen liegenden Metallblechlagen, kann aber hier keinen merklichen Beitrag leisten, da die Metallblechlagen die Struktursteifigkeit des gesamten Bauteils bestimmen.

Zur Reduzierung der Schallabstrahlung durch Hitzeschilde ist im Stand der Technik vorgeschlagen worden, die metallischen Lagen von Hitzeschilden mit Dämmauflagen zu versehen. Aus der DE 202004019840 U1 beispielsweise ist es bekannt, ein zusätzliches Blechstück an einem Ort besonders hoher Schallamplitude auf eine der Blechlagen des Hitzeschildes aufzuschweißen. Diese Lösungen haben jedoch den Nachteil, dass sie das Gewicht des Hitzeschildes vergrößern. Zudem ist die Herstellung eines derartigen Hitzeschildes aufwändig und mit zusätzlichen Verfahrensschritten verbunden. Schließlich erschweren die zusätzlichen Auflagen das Hindurchführen von anderen Komponenten oder Bauteilen wie Sonden durch den Hitzeschild.

Aus der EP 084 4139 A2 ist ein Hitzeschild nach dem Oberbegriff des Anspruchs 1 bekannt.

Aufgabe der Erfindung ist es entsprechend, einen Hitzeschild der eingangs beschriebenen Art zu schaffen, der eine verminderte Schallabstrahlung gegenüber Hitzeschilden mit durchgehenden metallischen Außenlagen aufweist, dabei aber einfach und ohne Gewichtserhöhung herstellbar ist und zudem auf einfache Weise das Hindurchführen anderer Bauteile durch den Hitzeschild gestattet.

Die Lösung dieser Aufgabe gelingt mit dem Hitzeschild gemäß Anspruch 1. Bevorzugte Weiterbildungen sind in den Unteransprüchen beschrieben.

Die Erfindung betrifft also einen Hitzeschild zum Abschirmen eines Gegenstandes gegen Hitze und/oder Schall mit wenigstens einer Metalllage, die wenigstens eine Ausnehmung aufweist, die von einem flexiblen Fasermaterial überspannt wird. Bei der Ausnehmung kann es sich um eine durch die wenigstens eine Metalllage hindurch gehende Öffnung oder eine Aussparung im Außenrandbereich der Metalllage handeln. Die Öffnung oder Aussparung ist erfindungsgemäß mit einem Fasermaterial abgedeckt. Die Abdeckung muss dabei nicht unbedingt die gesamte Ausnehmung in der Metalllage vollständig bedecken. Beispielsweise kann das Fasermaterial seinerseits eine Öffnung aufweisen oder nur einen Teil der Ausnehmung in der Metalllage des Hitzeschildes abdecken. Unabhängig vom Abdeckungsgrad der Ausnehmung in der Metalllage bewirkt das Fasermaterial, dass in der Metalllage auftretende Schwingungen nicht oder kaum noch weitergeleitet werden. Das Fasermaterial selbst gibt von seiner Oberfläche praktisch keinerlei Schall an die Umgebung ab. Schallausbreitung und Schallabstrahlung können deshalb verglichen mit einer durchgängigen Metalllage ohne Ausnehmung drastisch verringert werden.

Bei dem erfindungsgemäß verwendeten Fasermaterial handelt es sich um ein flexibles Material. Der Begriff flexibel ist hierbei so zu verstehen, dass sich das Fasermaterial wesentlich leichter biegen lässt als die Metallblechlagen. Nicht gemeint ist dagegen eine höhere Elastizität bei großer Krafteinwirkung, da die Fasern selbst keine spürbare Elastizität aufweisen und auch der jeweilige Verbund (z.B. Gewebe) nur minimale Elastizität besitzt. Aufgrund seiner leichteren Verformbarkeit als das metallische Material des Hitzeschildes kann sich das Fasermaterial einerseits leicht auch an stark dreidimensional verformte Konturen des Hitzeschildes anpassen. Andererseits verhindert die leichte Verformbarkeit auch ein Mitschwingen des Fasermaterials mit der wenigstens einen den Schall weitertragenden Metalllage. Die Schwingungen werden also im Fasermaterial gedämpft und bevorzugt ganz auf Null reduziert.

Das Fasermaterial wird bevorzugt an der- oder denjenigen Stellen der Metalllage angebracht, wo die größte Schallbelastung auftritt, also an Orten mit der größten Schwingungsamplitude. Form und Größe der freiliegenden Fasermaterialeinlage werden ebenfalls unter Berücksichtigung der erwarteten Größe der Schwingungsamplitude festgelegt und so bemessen, dass die gewünschte Schallreduktion erfolgt.

Geeignet als Fasermaterial sind grundsätzlich die verschiedensten Materialien. Abhängig von der Art des Einsatzes des Hitzeschildes sind Eigenschaften wie Temperaturbeständigkeit, Reißkraft, Dehnungsverhalten, Materialdichte, UV-, Chemikalien- oder Feuchtebeständigkeit usw. zu beachten. Um die Verarbeitbarkeit und Haltbarkeit zu verbessern, sind Fasermaterialien mit einem festen Faserverbund bevorzugt. Als Fasermaterialien werden erfindungsgemäß deshalb insbesondere Gewebe, Gestricke oder Gewirke eingesetzt, die entweder aus Einzelfasern oder Faserbündeln, insbesondere gesponnenen Fasern, hergestellt sein können. Grundsätzlich ist aber auch die Verwendung von Vliesen und hier besonders verfestigten Vliesen, also Vliesstoffen, möglich.

Das Fasermaterial ersetzt erfindungsgemäß einen Teil wenigstens einer Metalllage des Hitzeschildes. Insbesondere bei einlagigen Hitzeschilden muss das Fasermaterial also auch die Schall- und Hitzeschutzfunktion der Metalllage übernehmen. Aus diesem Grund sind solche Fasermaterialien bevorzugt, die eine ausreichende Materialdichte und Temperaturbeständigkeit aufweisen, um diese Funktionen übernehmen zu können. Zweckmäßig weist das Fasermaterial daher wenigstens eine der folgenden Eigenschaften auf:
- ein Flächengewicht von 500 - 1500 g/m², bevorzugt 280 - 1300 g/m², insbesondere 500 - 900 g/m²,
- eine Dicke von 0,1 - 2 mm, bevorzugt 0,2 -1,2 mm, insbesondere 0,4 - 0,8 mm,
- eine Temperaturbeständigkeit im Bereich von -60 °C - 1000 °C, bevorzugt -50 °C - 850 °C und insbesondere -50 °C - 600 °C,
- im Falle eines Gewebes 5 - 25, bevorzugt 7 - 20, Kettfäden und/oder 5 - 20, bevorzugt 6 - 15, Schussfäden.
Die Temperaturbeständigkeit ist im Allgemeinen ausreichend, wenn die beiden zuerst genannten, breiteren Bereiche kurzzeitig (für einige Minuten) erreicht werden. Als Dauertemperaturbeständigkeit ist meist der letztgenannte Bereich hinreichend. In Anwendungsfällen, bei denen nur eine geringe Temperaturbelastung zu erwarten ist, können selbstverständlich auch weniger temperaturstabile Fasermaterialien eingesetzt werden.

Zur Erleichterung der Verarbeitung und der Verbesserung der Stabilität des fertigen Produkts werden, wie erwähnt, bevorzugt möglichst reißfeste Fasermaterialien verwendet. Zweckmäßig sind Materialien mit einer Reißkraft von mindestens 200 N/cm, bevorzugt mindestens 500 N/cm und insbesondere mindestens 1000 N/cm. Gewebe werden in der Regel für ein bestimmtes Fasermaterial die größere Reißfestigkeit besitzen als Gestricke oder Vliese. Die Werte der Reißkraft beziehen sich dabei sowohl auf die Kraft in Richtung der Kett- als auch der Schussfäden. Die Art der Bindung ist grundsätzlich beliebig. Beispielhaft kann auf Leinwand-, Atlas- Panama- oder Köperbindung verwiesen werden.

Das Fasermaterial besteht bevorzugt aus mineralischen Fasern, insbesondere Glasfasern, Keramikfasern oder Aramidfasern. Kevlar- oder Kohlenstofffasern sind ebenfalls geeignet. Glasfasermaterialien und vor allem Glasfasergewebe sind momentan das bevorzugte Fasermaterial. Grundsätzlich sind auch Mischfasern aus den genannten Materialien einsetzbar oder Fasermischungen aus den genannten Fasern, ebenso Mischfasern mit Graphitanteil, wobei der Graphitanteil bevorzugt nicht an der Oberfläche der Faser liegt. Ein Fasermaterial aus rein metallischen Fäden ist dagegen nicht bevorzugt und wird erfindungsgemäß nicht verwendet. Möglich ist es aber, nichtmetallische Fäden mit einer dünnen Metallschicht zu versehen, um ihr Reflexionsvermögen und damit das des aus den Fasern hergestellten Fasermaterials zu verbessern. Überhaupt sind Modifikationen der Fasern des Fasermaterials generell möglich. Neben metallischen Beschichtungen der Fasern können auch solche aus Kunststoff genannt werden. Alternativ oder zusätzlich kann auch das fertige Fasermaterial mit einer Beschichtung versehen werden, die sich ganz oder partiell auf einer oder beiden Oberflächen befinden kann. Es können auch verschiedene Beschichtungen für ein Fasermaterial verwendet werden, beispielsweise eine metallische Beschichtung auf der einen und eine Kunststoffbeschichtung auf der anderen Seite des Fasermaterials. Auch eine Schichtabfolge Metall-Kunststoff oder umgekehrt ist möglich. Diese Beschichtungen dienen zum Beispiel der Verbesserung der Dichtigkeit des Fasermaterials und/oder einer Steigerung des Reflexionsvermögens und damit einer verbesserten Wärmeabstrahlung. Geeignete Beschichtungsmaterialien sind Aluminium als Metall und Polyurethan oder Polyethylenterephthalat als Kunststoffe. Die Kunststoffe sollten wie die Fasern selbst eine möglichst gute Temperaturstabilität aufweisen. Derartige beschichtete Fasermaterialien sind unter anderem als Kabelschutzmaterialien bekannt.

Das Fasermaterial kann grundsätzlich auf verschiedenste Art am Hitzeschild befestigt werden. Bei manchen Anwendungen kann es dabei auch im Hinblick auf die geringe Elastizität des Fasermaterials sinnvoll sein, im Rand- bzw. Befestigungsbereich des Fasermaterials einen Materialvorrat z. B. durch Faltenlegen zu erzeugen, wenn etwa der vom Fasermaterial überspannte Bereich eine größere Wölbung aufweist. Grundsätzlich sind Befestigungsarten, die zusätzliche Befestigungsmittel wie Nieten, Clips usw. erfordern, aber weniger bevorzugt, da sie das Befestigen umständlich machen und verteuern. Auch Schweiß-, Lot - oder Klebeverbindungen sind zwar möglich, gehören aber nicht zu den bevorzugten Befestigungsmöglichkeiten. Bevorzugt erfolgt die Befestigung des Fasermaterials am Hitzeschild vielmehr rein mechanisch durch Einklemmen des Fasermaterials mit dem Material der wenigstens einen Metalllage des Hitzeschildes. Zweckmäßig wird dabei das Fasermaterial in einem die Ausnehmung umgebenden Randbereich der Metalllage eingeklemmt. Dabei wird zum Beispiel der Randbereich S-förmig umgebördelt und ein Randabschnitt des Fasermaterials in dem Bördel eingeklemmt. Der Rand des Fasermaterials steht hier also nur wenig über den Rand der Ausnehmung in der Metalllage über. Um das Herausrutschen des Fasermaterials aus dem Bördel zu verhindern, kann in diesem Bereich eine gemeinsame dreidimensionale Verformung von Metalllage und Fasermaterial erfolgen. Beispielsweise können Halterippen, Haltenoppen oder ähnliches geformt werden, um das Fasermaterial sicherer an der Metalllage zu befestigen. Es kann auch bereits eine Aufrauung der Oberfläche der Metalllage im Bereich der Auflagefläche des Fasermaterials oder eine Oberflächenstrukturierung in diesem Bereich ausreichen. Eine Fixierung mittels Durchsetzfügen (Clinchen) ist ebenfalls denkbart. Daneben können auch hakenförmige Befestigungseinrichtungen nach Art eines metallischen Klettverschlusses verwendet werden, wie sie etwa in der DE 102006015100, DE 102006015148, DE 102006015145 und DE 102004048464 angegeben wurden.

Besitzt der Hitzeschild mehrere Ausnehmungen, die mit Fasermaterial bedeckt werden sollen, können jeweils separate Fasermaterial-Zuschnitte für die Ausnehmungen verwendet werden, deren Form und Größe den zugehörigen Ausnehmungen angepasst ist. Es können jedoch auch mehrere Ausnehmungen gemeinsam von einem zusammenhängenden Stück Fasermaterial überspannt werden. Die Befestigung des Fasermaterials erfolgt dann beispielsweise nur an den Außenrändern, nicht aber an den zueinander benachbarten Rändern der Ausnehmungen. Im Falle mehrerer mit Fasermaterial überspannter Ausnehmungen kann die wenigstens eine Metalllage auch bis auf ein Rahmengerüst reduziert werden, das lediglich noch den Zweck hat, das Fasermaterial zu halten, die dreidimensionale Form des Hitzeschildes vorzugeben und eine sichere Befestigung des Hitzeschildes zu gewährleisten. Dabei können bereits Stegbreiten von 2 mm ausreichend sein. In dieser Ausführungsform kann besonders viel Metallmaterial und damit Gewicht eingespart werden. Um beim Zuschnitt des Rahmengerüsts unnötigen Materialverbrauch zu vermeiden, ist es besonders bevorzugt, diesen aus einzelnen Abschnitten zu fertigen, die anschließend mittels insbesondere Formschlusses, z.B. über Schwalbenschwanz- oder Puzzleverbindungen, zusammengesetzt werden.

Die Erfindung eignet sich besonders gut auch für mehrlagige Hitzeschilde, insbesondere solche, die wenigstens eine weitere Metalllage aufweisen. Diese wenigstens eine weitere Metalllage besitzt dabei bevorzugt ebenfalls wenigstens eine Ausnehmung, die mit der Ausnehmung der ersten Metalllage korrespondiert. Die Ausnehmung - wie erwähnt entweder eine Öffnung im Innenbereich des Hitzeschildes oder eine Aussparung an dessen Außenrand - geht also durch den Hitzeschild insgesamt hindurch. Das im Bereich dieser Ausnehmung angeordnete Fasermaterial ersetzt also dort gleich mindestens zwei Metalllagen. Zwischen zwei benachbarten Metalllagen kann in an sich bekannter Weise auch eine nichtmetallische Isolationsschicht angeordnet sein. Im Falle eines derartigen Hitzeschildes fehlt die Isolationsschicht im Bereich der Ausnehmung zweckmäßig ebenfalls, sodass das Fasermaterial also dort auch noch die Isolationsschicht ersetzt. Die nichtmetallische Isolationsschicht ist also bevorzugt nur außerhalb der von dem Fasermaterial eingenommenen Bereiche vorhanden. Sie kann aber auch insgesamt weggelassen und durch das Fasermaterial ersetzt werden.

Die Befestigung des Fasermaterials erfolgt bevorzugt erneut rein mechanisch durch Einklemmen, hier nun aber zweckmäßig zwischen zwei benachbarten Metalllagen. Das Herausrutschen des Fasermaterials aus dem Verbund der Metalllagen kann dadurch verhindert werden, dass der Überlappungsbereich von Fasermaterial und Metalllagen aufgeraut oder strukturiert wird, wie schon oben beschrieben. Dazu können zusätzliche Haltenoppen, -rippen oder ähnliches erzeugt, beispielsweise eingeprägt, werden. Möglich ist es aber auch, ohnehin aufgrund der dreidimensionalen Verformung des Hitzeschildes benötigte Biegungen, Rippen usw. zur Halterungsverbesserung zu verwenden. Das Fasermaterial ist dann so groß auszulegen, dass es in die entsprechenden Biegungsbereiche hineinreicht. Die Haltenoppen, -rippen etc. werden bevorzugt im gleichen Arbeitsschritt wie die Verformung des zunächst planen Lagenverbundes des Hitzeschildes (mit aufgelegtem Fasermaterial) zu seiner dreidimensionalen Endform erzeugt, sodass zur Befestigung des Fasermaterials weder zusätzliche Befestigungsmittel noch zusätzliche Arbeitsschritte benötigt werden.

Es wurde bereits darauf hingewiesen, dass das Fasermaterial nicht zwingend die gesamte Ausnehmung in der wenigstens einen Metalllage des Hitzeschildes abdecken muss. Im Falle einer Randaussparung kann dies zum Beispiel bedeuten, dass das Fasermaterial nicht ganz bis an die Linie heranreichen muss, welche die Außenrandpunkte verbindet, welche die Ausnehmung seitlich begrenzen. Möglich ist es auch, das Fasermaterial im Bereich einer Außenrandaussparung vom Rand her zu schlitzen, um beispielsweise durch den Schlitz einen Gegenstand hindurchzuführen. Zusätzlich oder alternativ kann im Inneren der Fläche eine Durchgangsöffnung vorhanden sein (zum Beispiel am Ende des Schlitzes als Aufweitung), um Platz für den Gegenstand zu schaffen. Messsonden (zum Beispiel Lambda- oder Temperatursonden), Strom- oder Datenkabel, Einspritzventile, Einspritzleitungen (zum Beispiel solche für die Nachverbrennung bei Partikelfiltern) oder Druckleitungen (zum Beispiel für eine Differenzdruckmessung) sind Beispiele solcher Gegenstände.

Auch im Innenbereich des Hitzeschildes kann das Fasermaterial im Bereich der Öffnung in der Metalllage wenigstens eine Durchgangsöffnung freilassen - sei es dadurch, dass das Fasermaterial nicht im gesamten Umfangsbereich an den Öffnungsrand heranreicht, sei es, indem im Inneren des Fasermaterials eine Durchgangsöffnung vorhanden ist. Im eingebauten Zustand des Hitzeschildes wird diese Durchgangsöffnung in der Regel nicht offen bleiben, da dies dem Schall- und Hitzeschutz abträglich wäre. Die Durchgangsöffnung dient also in der Regel erneut zur Aufnahme eines Gegenstandes, der durch den Hitzeschild hindurchgeführt werden soll. Das Hindurchführen des Gegenstandes ist erfindungsgemäß sehr einfach möglich, da eine Öffnung geeigneter Form und Größe durch entsprechenden Zuschnitt des Fasermaterials auf einfache Weise erfolgen kann. Oft ist auch bereits das Einbringen eines Schlitzes, Kreuzschlitzes oder eines strahlen- oder sternförmigen Einschnitts im Fasermaterial ausreichend. Zur Verstärkung kann der Randbereich um die Durchgangsöffnung herum gegebenenfalls durch bloßes Umschlagen oder Anbringen einer Auflage stabilisiert werden. Dies ist, wenn der Bereich des Schlitzes bzw. Kreuzschlitzes nicht unter Spannung steht, jedoch zumindest bei Gewebe nicht notwendig, da das Fasermaterial üblicherweise nicht zum Ausfransen neigt. Anstelle eines Lochs oder eines Schlitzes kann die Durchgangsöffnung auch dadurch hergestellt werden, dass zwei Abschnitte des Fasermaterials so übereinander gelegt werden, dass sie einen schmalen überlappenden Bereich aufweisen und sich ansonsten ergänzen. Ein durchzuführender Gegenstand kann dann mittels Auseinanderschieben der Überlappung durch den Hitzeschild hindurchgeführt werden, anschließend liegt das doppelt liegende Material ähnlich einem Kragen an diesem Gegenstand an. Das Durchführen im Bereich des Fasermaterials hat zudem den Vorteil, dass der durchgeführte Gegenstand nicht mit auf den Hitzeschild einwirkenden Vibrationen beaufschlagt wird, da diese durch das Fasermaterial praktisch nicht auf den Gegenstand übertragen werden. Zudem sind Positionskorrekturen des Gegenstandes auf sehr einfache Weise möglich, da das flexible Fasermaterial Bewegungen zumindest in gewissem Umfang folgen kann.

Die Erfindung kann auf verschiedenste ein- oder mehrlagige Hitzeschilde angewendet werden. Als Materialien können die bisher üblichen eingesetzt werden. Die metallischen Lagen bestehen beispielsweise aus Stahl, aluminiumplattiertem Stahl oder Aluminium(-legierungen). Feueraluminierter Stahl ist besonders weit verbreitet. Edelstähle werden für Einsatzgebiete mit Korrosionsrisiko und höherer Temperaturbelastung bevorzugt, nickelreiche Stähle für Hochtemperaturanwendungen. Aluminiumplattierter Stahl weist besondere Reflexionseigenschaften auf. Die wenigstens eine Metalllage des Hitzeschildes weist üblicherweise eine Dicke von 0,15 bis 0,8 mm, bevorzugt 0,25 bis 0,4 mm, auf. Bei mehr als einer Metalllage ist es von der jeweiligen Anwendung abhängig, ob gleiche Blechstärken oder unterschiedliche Blechstärken für beide Lagen gewählt werden. Die Wahl der individuellen Blechstärken erfolgt in Abhängigkeit von der für die dreidimensionale Verformung notwendigen Elastizität und der für das verformte Bauteil notwendigen Steifigkeit so, dass eine Rissbildung im fertigen Teil unter Einsatzbedingungen vermieden wird, gleichzeitig aber auch eine möglichst regelmäßige und reproduzierbare Formgebung möglich ist. Die Isolationsschicht, wenn sie vorhanden ist, besteht beispielsweise aus Glimmer oder Vermiculit, temperaturbeständiger Pappe, anorganischen oder organischen Faserverbundmaterialien oder anderen geeigneten Dämmstoffen wie beispielsweise Geweben, Gewirken und/oder Gestricken aus temperaturbeständigen Fasern. Bei partikelförmigen Isolationsschichten muss selbstverständlich der Bereich, in dem diese vorhanden ist, nach außen hin abgeschlossen sein. Dies kann auch durch angrenzendes Fasermaterial geschehen. Wie erwähnt, kann die Isolationsschicht auch ganz durch das flexible Fasermaterial ersetzt werden. Daneben können zur Befestigung des Fasermaterials verwendete Rippen gleichzeitig als Abstandshalter zwischen den Blechlagen dienen, wenn der Hitzeschild nur ein Luftpolster zwischen den Metalllagen zur Isolation nutzt.

Die Erfindung kann grundsätzlich für alle Arten von Hitzeschilden Anwendung finden, zum Beispiel für solche, die in Motorräumen von Kraftfahrzeugen eingesetzt werden, insbesondere im Bereich der Abgasanlage, um benachbarte temperaturempfindliche Bauteile und Aggregate gegenüber unzulässiger Erhitzung und/oder Schall zu schützen. Konkret können die Hitzeschilde beispielsweise zum Abschirmen eines Katalysators oder Vorkatalysators, eines Partikelfilters, eines Oxidationskatalysators oder sonstiger Komponenten im Bereich des Abgasstrangs oder eines Turboladers eingesetzt werden.

Die Befestigung des Hitzeschildes am Einsatzort erfolgt grundsätzlich auf die im Stand der Technik übliche Weise, zum Beispiel mittels Schrauben oder ähnlicher Befestigungsmittel, die durch den Hitzeschild hindurchgeführt und an der Karosserie oder einem anderen geeigneten Bauteil festgelegt werden. Die Öffnung für das Befestigungsmittel wird in einen Bereich des Hitzeschildes gelegt, in dem eine Metalllage vorhanden ist, und außerhalb des mit Fasermaterial abgedeckten Ausnehmungsbereiches. Dämpfungselemente in Form von Drahtkissen oder Ähnlichem können zwischen Hitzeschild und dem Bauteil, an dem der Hitzeschild befestigt wird, ebenfalls eingesetzt werden.

Die Erfindung soll nachfolgend unter Bezug auf eine Zeichnung näher beschrieben werden. Die gezeigten Beispiele sind jedoch lediglich zur Erläuterung gedacht; die Erfindung ist nicht auf sie beschränkt. In den Figuren, in denen gleiche Teile mit gleichen Bezugszeichen bezeichnet sind, zeigen schematisch:
- Figur 1:: ein erstes Ausführungsbeispiel eines erfindungsgemäßen Hitzeschildes in Draufsicht;
- Figur 2:: in zwei Teilfiguren 2a) und 2b) eine Draufsicht auf ein zweites und drittes Ausführungsbeispiel eines erfindungsgemäßen Hitzeschildes;
- Figur 3:: eine Teil-Querschnittsdarstellung entlang der Linie A-A in Figur 1 für einen einlagigen Hitzeschild;
- Figur 4:: eine Teil-Querschnittsdarstellung entlang der Linie A-A in Figur 1 für einen dreilagigen Hitzeschild;
- Figur 5:: eine Teil-Querschnittsansicht eines einlagigen Hitzeschildes in einem Verbin- dungsbereich von Metalllage und Fasermaterial;
- Figur 6:: eine Teil-Querschnittsdarstellung entlang der Linie A-A in Figur 1 für einen zweilagigen Hitzeschild;
- Figur 7:: eine Teil-Querschnittsdarstellung entlang der Linie A-A in Figur 1 für ein wei- teres Beispiel eines dreilagigen Hitzeschildes;
- Figur 8:: eine Teil-Querschnittsdarstellung entlang der Linie B-B in Figur 2a) für einen einlagigen Hitzeschild;
- Figur 9:: eine Teil-Querschnittsdarstellung entlang der Linie B-B in Figur 2a) für einen zweilagigen Hitzeschild;
- Figuren 10 und 11:: Teil-Querschnittsdarstellungen entlang der Linie B-B in Figur 2a) für dreilagige Hitzeschilde und
- Figur 12:: einen Querschnitt durch ein Beispiel eines beschichteten Fasermaterials.

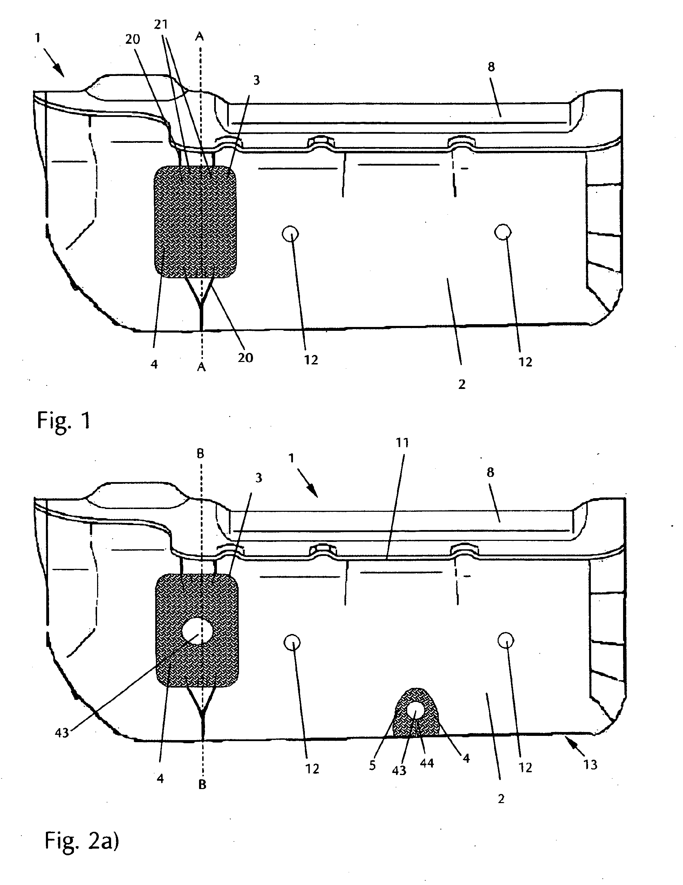

In Figur 1 ist eine Draufsicht auf ein erstes Beispiel eines erfindungsgemäßen Hitzeschildes gezeigt. Der Hitzeschild 1 weist im Wesentlichen eine sattelartige Form auf. Es kann sich beispielsweise um einen Hitzeschild handeln, der im Bereich eines Abgasstranges eines Kraftfahrzeuges verwendet wird. Figur 1 steht beispielhaft für ein- oder mehrlagige Hitzeschilde. Im Falle eines einlagigen Hitzeschilds weist dieser eine einzige metallische Lage auf, die hier mit dem Bezugszeichen 2 bezeichnet ist. Im Falle eines mehrlagigen Hitzeschildes ist zusätzlich zu der Metalllage 2 eine weitere Metalllage vorhanden, die hier mit 8 bezeichnet ist und nur im oberen Bereich der Figur zu sehen ist, wo der Hitzeschild in Richtung auf den Betrachter hin umgebogen ist. Die beiden Metalllagen 2 und 8 sind im Randbereich 11 des Hitzeschildes 1 miteinander verbunden, beispielsweise durch Umbördeln des Randes der einen Metalllage um die andere. Zur Versteifung des Hitzeschildes 1 sind in diesen Rippen 20 eingeprägt, die durch die durchgezogenen Linien auf den Oberflächen des Hitzeschildes 1 angedeutet sind. Für die Befestigung des Hitzeschildes sind Befestigungsmittelöffnungen 12 vorhanden, durch welche hindurch Befestigungsschrauben geführt und beispielsweise mit der Karosserie verschraubt werden.

Der Hitzeschild 1 unterscheidet sich von vergleichbaren Hitzeschilden des Standes des Technik dadurch, dass er eine Öffnung 3 aufweist, die durch die eine Metalllage 2 oder im Falle mehrlagiger Hitzeschilde durch sämtliche seiner Lagen hindurchgeht. Die Öffnung 3 besitzt hier die Form eines Rechtecks mit gerundeten Ecken. Sie befindet sich an einer Stelle des Hitzeschildes 1, der eine besonders große Schwingungsamplitude aufweist. Die Öffnung 3 wird im gezeigten Beispiel von einem Fasermaterial 4 vollständig verschlossen. Bei dem Fasermaterial 4 kann es sich beispielsweise um ein Gewebe aus Glasfasern handeln, das flexibel ist und eine große Reißfestigkeit und Temperaturstabilität aufweist. In unmittelbarer Nachbarschaft zu einer Rippe 20 bildet das Fasermaterial 4 oftmals Falten 21 aus, während es sich sonst falten- und spannungsfrei über die Öffnung 3 wölbt.

Im Betrieb des Hitzeschildes 1 wird von der Karosserie über die Befestigungsmittelöffnungen 12 und die Befestigungsschrauben Körperschall in die metallischen Lage 2 und gegebenenfalls die Metalllage 8 des Hitzeschildes eingeleitet und über deren Oberflächen weitertransportiert. Von diesen Oberflächen wird der eingeleitete Körperschall zu einem gewissen Grad als Luftschall wieder abgegeben und führt zu unerwünschter Geräuschbelästigung. Normalerweise wäre die Schallabgabe im Bereich mit der größten Schwingungsamplitude des Hitzeschildes am größten. Im erfindungsgemäßen Hitzeschild 1 jedoch befindet sich im Bereich mit der größten Schwingungsamplitude die mit dem Fasermaterial 4 abgedeckte Öffnung 3. Das Fasermaterial 4 verhindert, dass Körperschall weitergeleitet wird. Damit wird die Abgabe von Luftschall in diesem Bereich drastisch reduziert oder ganz auf Null gebracht. Gleichzeitig sinkt damit auch die Geräuschbelastung der Umgebung.

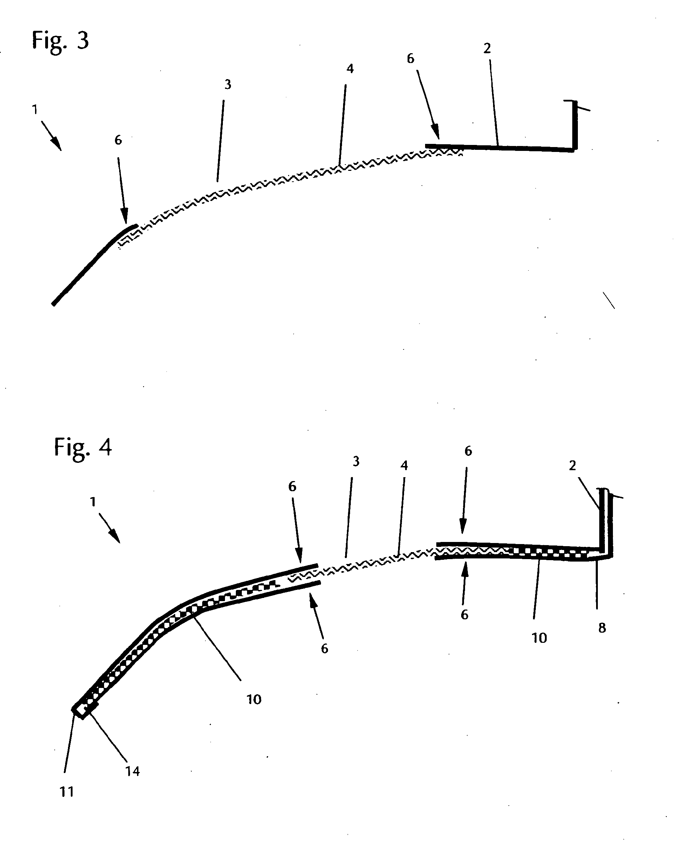

Figuren 3 bis 7 zeigen Querschnitte durch den Hitzeschild gemäß Figur 1 im Bereich der Öffnung 3 mit dem Fasermaterial 4. Die Rippe 20 wird dabei nicht berücksichtigt. Figur 3 stellt dabei einen einlagigen Hitzeschild mit nur einer Metalllage 2 dar. Der Querschnitt endet im Bereich der Sattelwölbung, so dass der auf den Betrachter zuweisende umgebogene Bereich des Hitzeschildes nicht mehr zu sehen ist. Dargestellt werden soll hier, wie auch in nachfolgenden Figuren, jedoch hauptsächlich der Bereich der Durchgangsöffnung 3 mit dem darin angeordneten Fasermaterial 4. Wie erkennbar, ist das Fasermaterial 4 nur wenig größer als die Fläche der Öffnung 3, so dass eine Überlappung mit der Metalllage 2 nur im Randbereich 6 um die Öffnung 3 erfolgt. In diesem Randbereich 6 ist das Fasermaterial 4 an der Metalllage 2 befestigt, beispielsweise durch Kleben, Clinchen oder Nieten. Die Befestigungsmittel sind hier nicht dargestellt.

Figur 4 zeigt ein Beispiel eines dreilagigen Hitzeschildes 1 im gleichen Ausschnitt wie dem der Figur 3. Zusätzlich zur Metalllage 2 ist eine weitere Metalllage 8 vorhanden. Im Randbereich 11 des Hitzeschildes 1 sind beide Metalllagen dadurch aneinander befestigt, dass in der Metalllage 2 ein Bördel 14 ausgebildet ist, der den Rand der Metalllage 8 umgreift und auf dieser aufliegt. Zwischen beiden Metalllagen 2 und 8 ist eine Isolationsschicht 10 angeordnet, die wie im Stand der Technik üblich beispielsweise aus temperaturstabiler Pappe, isolierendem Fasermaterial, isolierenden Gestricken, Gewirken oder Geweben usw. bestehen. Das Isolationsmaterial 10 ist in den Randbereichen 6 um die Öffnung 3 herum ausgespart. Dieser Bereich wird von dem flexiblen Fasermaterial 4 eingenommen, das zwischen den Randbereichen 6 der Metallplatten 2 und 8 eingeklemmt ist. Die Befestigung des Fasermaterials 4 zwischen den Metallplatten 2 und 8 kann dadurch verbessert werden, dass beispielsweise die aufeinander zuweisenden Oberflächen der Metalllagen 2 und 8 in den Randbereichen 6 um die Öffnung 3 herum aufgeraut oder mit einer Oberflächenstrukturierung versehen sind. Außerdem können die Metalllagen 2 und 8 zusammen mit dem zwischen ihnen eingelegten Fasermaterial 4 dreidimensional verformt werden, um das Fasermaterial 4 sicherer zwischen den Metallplatten zu halten. Bei den dreidimensionalen Verformungen kann es sich auch um Versteifungsrippen oder sonstige Biegestellen handeln, die im Hitzeschild 1 ohnehin vorhanden sind. In solchen Fällen wird das Fasermaterial 4 soweit zwischen die Metallplatten 2 und 8 gezogen, dass es gemeinsam mit den Metalllagen dreidimensional verformt wird.

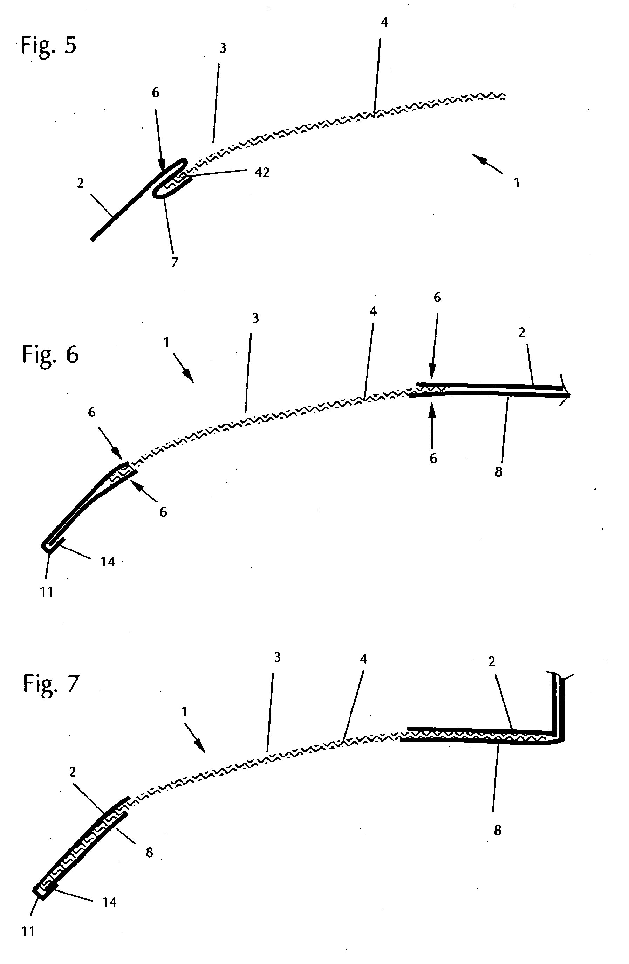

Figur 5 zeigt eine Möglichkeit der Befestigung des Fasermaterials 4 bei einem einlagigen Hitzeschild 1 mit nur einer Metalllage 2. Hier ist im Randbereich 6 der Metalllage 2 um die Öffnung 3 herum ein S-förmiger Bördel 7 ausgebildet. In den zur Öffnung 3 hin offenen Schenkel des Bördels 7 ist der Randbereich 42 des Fasermaterials 4 eingelegt. Nach dem Einlegen des Randbereiches 42 in den Bördel 7 wird dieser verpresst, so dass das Fasermaterial 4 im Bördel 7 eingeklemmt wird.

Figur 6 zeigt ein Beispiel eines zweilagigen Hitzeschildes 1. Im Unterschied zu dem in Figur 4 dargestellten Hitzeschild ist zwischen den Metalllagen 2 und 8 hier keine Isolationsschicht 10 vorhanden. Die Anbringung des Fasermaterials 4 in der Öffnung 3 entspricht im Wesentlichen derjenigen, die in Figur 4 dargestellt wurde.

Figur 7 zeigt ein Beispiel eines dreilagigen Hitzeschildes, der ebenfalls ähnlich demjenigen der Figur 4 ist. Hier ist jedoch keine gesonderte Isolationsschicht 10 mehr vorhanden. Stattdessen ist das Fasermaterial 4 so großflächig angeordnet, dass es nicht nur die Öffnung 3 abdeckt, sondern gleichzeitig auch noch die Funktion der Isolationsschicht mit übernimmt.

Die im vorstehenden besprochenen Figuren stimmen darin miteinander überein, dass in sämtlichen Hitzeschilden die Öffnung 3 vollständig mit dem Fasermaterial 4 verschlossen ist. Es besteht jedoch auch die Möglichkeit, dass das Fasermaterial 4 die Öffnung 3 nicht vollständig abdeckt. Entsprechende Beispiele sollen nachfolgend beschrieben werden. Figur 2a) zeigt eine Draufsicht auf einen Hitzeschild 1, der größtenteils demjenigen der Figur 1 entspricht. Es kann sich erneut um einen ein- oder mehrlagigen Hitzeschild handeln. Wie im Hitzeschild gemäß Figur 1 ist in dessen Innerem eine Öffnung 3 vorhanden, die mit Fasermaterial 4 überspannt ist. Im Unterschied zur Figur 1 ist im Fasermaterial 4 hier jedoch eine Durchgangsöffnung 43 vorhanden. Die im gezeigten Beispiel runde Durchgangsöffnung 43 kann beispielsweise dazu verwendet werden, ein Kabel, eine Zuleitung oder eine Messsonde wie beispielsweise eine Lambdasonde in den vom Hitzeschild 1 abgeschirmten Raum zu führen. Das Durchführen durch die Durchgangsöffnung 43 hat den Vorteil, dass der durchgesteckte Gegenstand nicht mit über die Oberfläche der Metalllagen des Hitzeschildes weitergeleiteten Vibrationen beaufschlagt wird, gleichzeitig aber rundum im Hitzeschild abgedichtet ist. Da das Fasermaterial flexibel ist, kann, wenn es nicht stramm gespannt ist, die Position des durch die Öffnung 43 geführten Gegenstandes auch in gewissem Umfang korrigiert werden, so dass der Gegenstand auf einfache Weise in die gewünschte Position gebracht werden kann.

Neben der im Inneren des Hitzeschildes 1 angeordneten Öffnung 3 ist im gezeigten Beispiel zusätzlich im Randbereich 13 des Hitzeschildes eine Aussparung 5 vorhanden. Auch diese in etwa zungenförmige Aussparung 5 wird von einem Fasermaterial 4 abgedeckt. Auch hier ist erneut eine runde Durchgangsöffnung 43 vorhanden, die ebenfalls zum Durchführen eines Gegenstandes durch den Hitzeschild 1 verwendet werden kann. Zwischen der Durchgangsöffnung 43 und dem Rand 11 des Hitzeschildes 1 ist ein Schlitz 44 im Fasermaterial 4 vorhanden. Dieser Schlitz 44 erlaubt es, den Gegenstand von außen in die Öffnung 43 im Fasermaterial 4 einzuschieben.

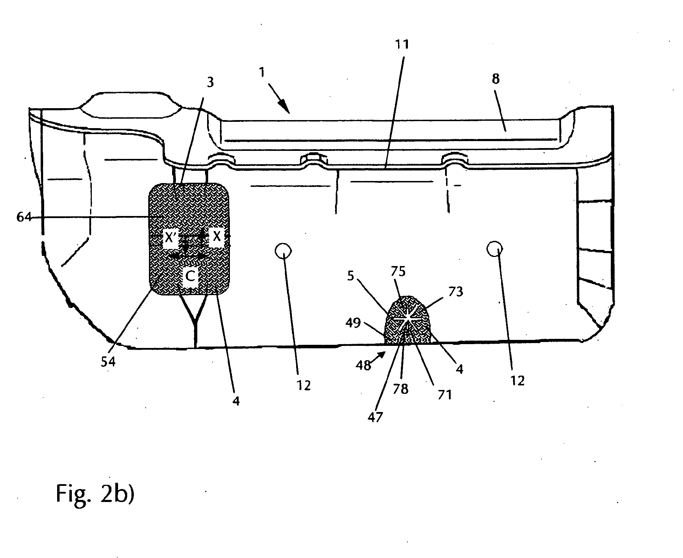

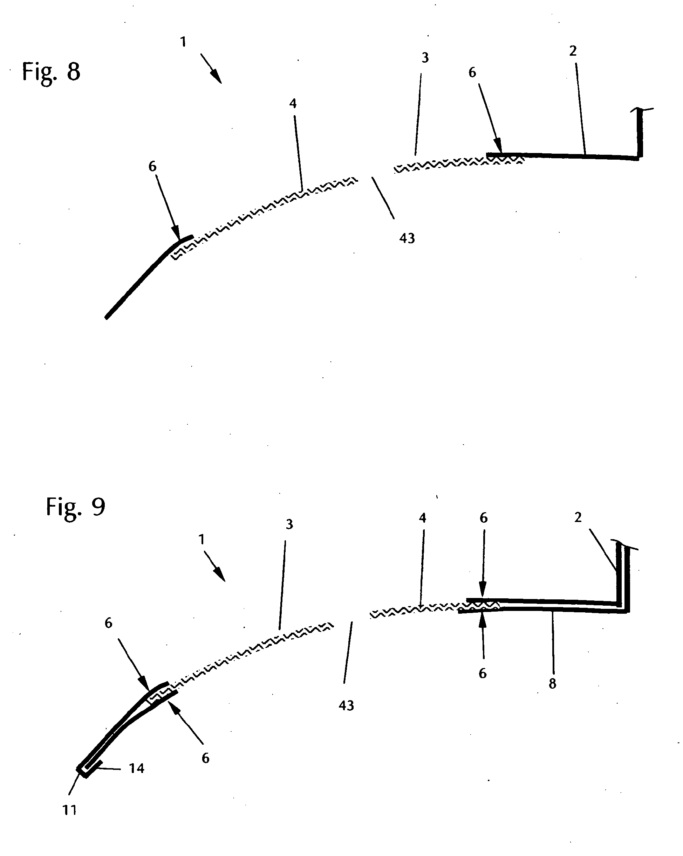

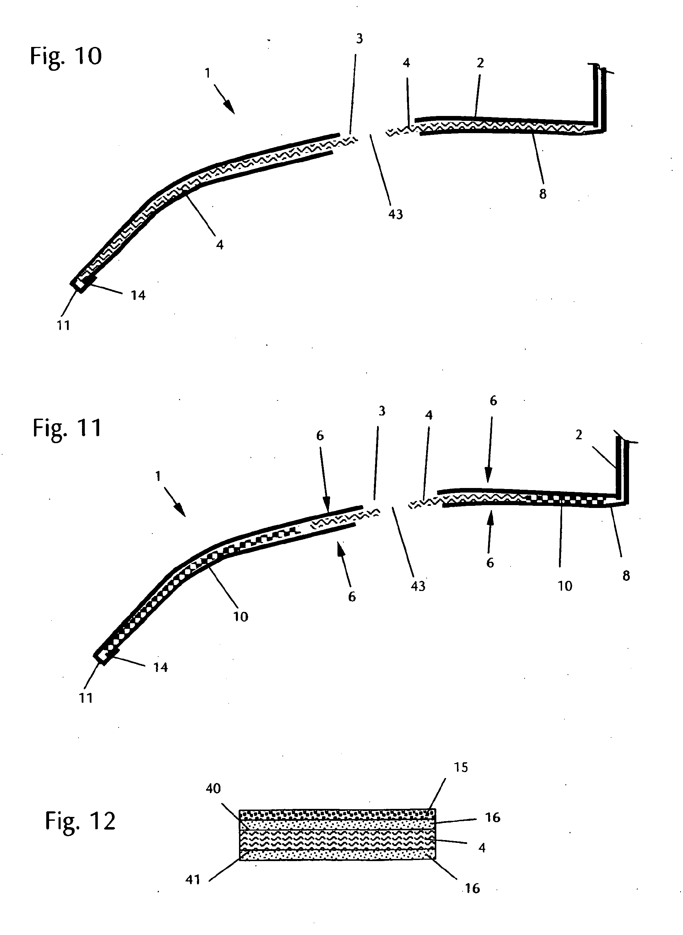

Figuren 8 bis 11 zeigen Teil-Querschnitte durch den Hitzeschild der Figur 2 entlang der Linie B-B. Dabei entspricht die Darstellung der Figur 8 im Wesentlichen derjenigen der Figur 3, diejenige der Figur 9 derjenigen der Figur 6, die Darstellung der Figur 10 derjenigen der Figur 7 und schließlich die Darstellung der Figur 11 derjenigen der Figur 4. Der Unterschied besteht lediglich darin, dass im Inneren des Fasermaterials 4 die Durchgangsöffnung 43 vorhanden ist.

Figur 2b) zeigt wiederum einen Hitzeschild mit zwei durch das Fasermaterial 4 teilweise bedeckten Öffnungen 3 und 5. Die Öffnung 3 wird dabei von zwei Abschnitten 54 und 64 Fasermaterials bedeckt, deren Ränder im Bereich der Mitte der Öffnung 3 parallel zueinander laufen und überlappen. In der dargestellten Draufsicht liegt der Abschnitt 54 im Überlappungsbereich über dem Abschnitt 64. Bevorzugt werden die Abschnitte Materials so befestigt, dass ein geringer Materialüberschluss in Richtung C in beiden Abschnitten vorhanden ist. Dadurch ist es möglich, dass die Ränder des Teils 64 in Richtung des Pfeils X und des Teils 54 in Richtung des Pfeils X', also gegeneinander, verschoben werden, so dass die Abschnitte nur noch in ihren seitlichen Randbereichen (im Randbereich der Öffnung 3) überlappen und sich in der Mitte eine Öffnung ausbildet. Durch diese Öffnung lässt sich ein Gegenstand durchführen, die Ränder der Abschnitte 54 und 64 liegen nach Durchführen wie ein Kragen an diesem an.

Am Beispiel der Öffnung 5 wird eine doppelt-kreuzschlitzförmige bzw. strahlenförmige Durchführmöglichkeit 47 aufgezeigt. Beim Einführen eines Gegenstands bewegen sich die zwischen den Einschnitten des Schlitzes liegenden Lappen 71-78 aus der Ebene des Fasermaterials heraus und umschließen den Gegenstand. Diese Ausführungsform ist insbesondere für die Durchführung von Gegenständen mit einem großen Ende, bei denen im fertigen Zustand nur ein Bereich geringen Durchmessers in der Ebene des Fasermaterials verbleibt, bevorzugt. Nach Durchführen des dicken Endes fallen die Lappen 71-78 wieder soweit zurück, dass sie den Gegenstand kragenförmig weitgehend begrenzen. Im fertigen Zustand bzw. im eingebauten Hitzeschild verbleibt somit keine große Öffnung. Auf diese Art wird einem Kamineffekt vorgebeugt.

Der Randbereich 48 der Öffnung 5 ist hier so gestaltet, dass das Metallblech (ein- oder mehrlagig) nur als schmaler Streifen verläuft. Das Fasermaterial 4 ist um diesen umgelegt und auf sich selber umgeschlagen, es reicht dabei bis zur gestrichelten Linie 49. Die eigentliche Befestigung am Metallblech kann dabei so erfolgen, dass der schmale Streifen Haken aufweist, in die das Fasermaterial eingehakt wird.

In den Hitzeschilden der vorangegangenen Figuren wurde die Öffnung 3 jeweils von einem Fasermaterial überspannt, das als solches verwendet wurde. Bevorzugte Beispiel für das Fasermaterial sind dabei Gewebe aus hitzebeständigen Fasern, insbesondere aus Glasfasern oder Aramidfasern. Es ist jedoch auch möglich, das Fasermaterial zu modifizieren, um beispielsweise seine Dichtigkeit oder sein Reflektionsverhalten zu verbessern. Eine bevorzugte Modifikation besteht darin, das Fasermaterial 4 zu beschichten. Die Beschichtung kann dabei ganz oder teilweise auf einer oder beiden Oberflächen erfolgen. Beispielsweise kann es sinnvoll sein, das Fasermaterial auf seiner der Schallquelle und/oder der Hitzequelle zugewandten Oberfläche zu metallisieren, um Hitze und/oder Schall besser reflektieren zu können. Die Dichtigkeit kann beispielsweise durch Beschichtung mit Kunststoff verbessert werden. Außerdem erleichtert eine Unterschicht aus Kunststoff die gleichmäßige und glatte Beschichtung mit Metall.

Figur 12 zeigt ein Beispiel eines beschichteten Fasermaterials 4 im Teil-Querschnitt. Hier sind beide Oberflächen 40 und 41 des Fasermaterials 4 ganzflächig beschichtet. Zunächst ist dabei auf die Oberflächen 40 und 41 jeweils eine Schicht 16 aus Kunststoff aufgetragen. Geeignet sind hier beispielsweise Polyurethan oder Polyethylenterephthalat. Auf einer der Kunststoffbeschichtungen 16 ist eine weitere Schicht 15 vorhanden. Hier handelt es sich um eine metallische Beschichtung, bevorzugt eine Aluminium-Beschichtung. Diese Schicht 15 ist der Schall- und Hitzequelle zugewandt. Im Falle der Verwendung eines solchen Materials weist die Schicht 15 in den Hitzeschilden der Figuren 1 und 2 auf den Betrachter zu.

## Patentansprüche

1. Hitzeschild (1) zum Abschirmen eines Gegenstandes gegen Hitze und/oder Schall mit wenigstens einer Metalllage (2), die wenigstens eine Ausnehmung (3, 5) aufweist, die von einem flexiblen Fasermaterial (4) überspannt wird,
**dadurch gekennzeichnet,**
**dass** die wenigstens eine Metalllage (2) und der Hitzeschild (1) dreidimensional verformt sind und das Fasermaterial (4) eine Temperaturbeständigkeit im Bereich von -50 °C bis 600 °C aufweist.

2. Hitzeschild gemäß Anspruch 1,
**dadurch gekennzeichnet,**
**dass** die Ausnehmung eine durch die wenigstens eine Metalllage (2) hindurch gehende Öffnung (3) oder eine Aussparung (5) im.Außenrandbereich (13) der Metalllage (2) ist.

3. Hitzeschild gemäß Anspruch 1 oder 2,
**dadurch gekennzeichnet,**
**dass** das Fasermaterial (4) ein Gewebe, Gestrick, Gewirke oder Vliesstoff ist.

4. Hitzeschild gemäß einem der vorhergehenden Ansprüche,
**dadurch gekennzeichnet,**
**dass** das Fasermaterial (4) auf wenigstens einer seiner Oberflächen (40, 41) ganz oder teilweise mit einer Beschichtung, insbesondere aus Metall oder Kunststoff, versehen ist.

5. Hitzeschild gemäß einem der vorhergehenden Ansprüche,
**dadurch gekennzeichnet,**
**dass** das Fasermaterial (4) wenigstens eine der folgenden Eigenschaften aufweist:
- ein Flächengewicht von 50 - 1500 g/m², bevorzugt 280 - 1300 g/m², insbesondere 500 - 900 g/m²,
- eine Dicke von 0,1 - 2 mm, bevorzugt 0,2 - 1,2 mm, insbesondere 0,4 - 0,8 mm,
- eine Reißkraft von mindestens 200 N/cm, bevorzugt mindestens 500 N/cm und insbesondere mindestens 1000 N/cm,
- im Falle eines Gewebes:
- 5 - 25, bevorzugt 7 - 20, Kettfäden und/oder
- 5 - 20, bevorzugt 6 - 15, Schussfäden.

6. Hitzeschild nach einem der vorhergehenden Ansprüche,
**dadurch gekennzeichnet,**
**dass** das Fasermaterial (4) aus mineralischen Fasern, insbesondere Glasfasern, Keramikfasern oder Aramidfasern, Kevlar- oder Kohlenstofffasern oder aus deren Mischfasern/Gemischen dieser Fasern besteht.

7. Hitzeschild nach einem der vorhergehenden Ansprüche,
**dadurch gekennzeichnet,**
**dass** das Fasermaterial (4) in einem die Ausnehmung (3, 5) umgebenden Randbereich (6) der Metalllage (2) eingeklemmt ist.

8. Hitzeschild nach Anspruch 7,
**dadurch gekennzeichnet,**
**dass** der Randbereich (6) S-förmig umgebördelt ist und ein Randabschnitt (42) des Fasermaterials (4) in dem Bördel (7) eingeklemmt ist.

9. Hitzeschild nach einem der Ansprüche 1 bis 6,
**dadurch gekennzeichnet,**
**dass** die Metalllage (2) mehrere Ausnehmungen (3, 5) aufweist, die von einem zusammenhängenden Stück Fasermaterials (4) überspannt werden.

10. Hitzeschild nach einem der vorhergehenden Ansprüche,
**dadurch gekennzeichnet,**
**dass** er wenigstens eine weitere Metalllage (8) aufweist, die wenigstens eine mit der Ausnehmung (3) der ersten Metalllage (2) korrespondierende Ausnehmung (9) besitzt.

11. Hitzeschild gemäß Anspruch 10,
**dadurch gekennzeichnet,**
**dass** das Fasermaterial (4) zwischen zwei benachbarten Metalllagen (2, 8) eingeklemmt ist.

12. Hitzeschild nach Anspruch 10 oder 11,
**dadurch gekennzeichnet,**
**dass** zwischen den Metalllagen (2, 8) zusätzlich zu dem Fasermaterial (4) und insbesondere außerhalb der von dem Fasermaterial (4) eingenommenen Bereiche eine nichtmetallische Isolationsschicht (10) vorhanden ist.

13. Hitzeschild nach einem der vorhergehenden Ansprüche,
**dadurch gekennzeichnet,**
**dass** im Fasermaterial (4) wenigstens eine Durchgangsöffnung (43, 47) vorhanden ist.

14. Hitzeschild nach einem der Ansprüche 1 bis 8 und 10 bis 13,
**dadurch gekennzeichnet,**
**dass** die Ausnehmung (3, 5) von mindestens zwei Abschnitten (54, 64) flexiblen Fasermaterials (4) abschnittsweise überspannt wird.

15. Verwendung des Hitzeschildes nach einem der vorhergehenden Ansprüche in Motorräumen von Kraftfahrzeugen, insbesondere im Bereich der Abgasanlage.

## Claims

1. Heat shield (1) for shielding an object against heat and/or sound with at least one metallic layer (2), which comprises at least one cut-out (3, 5) which is spanned by a flexible fibre material (4), **characterised by** the at least one metallic layer (2) and the heat shield being three-dimensionally deformed and in that the fibre material (4) has a temperature resistance in the range between -50°C and 600°C.

2. Heat shield according to claim 1, **characterised in that** the cut out is an opening (3) which passes through at least one metallic layer or a recess (5) in the edge region (13) of the metallic layer (2).

3. Heat shield according to claim 1 or 2, **characterised in that** the fibre material is a woven, knitted, interlaced or a fleece.

4. Heat shield according to one of the preceding claims, **characterised in that** the fibre material at least one of its surfaces (40, 41) is completely or in part coated with a coating, the coating being preferably metallic or synthetic.

5. Heat shield according to one of the preceding claims, **characterised in that** the fibre material has at least one of the following properties:
- a mass per unit area between 50 and 1500 g/m², preferably between 280 and 1300 g/m² and most preferably between 500 and 900 g/m²;
- a thickness between 0.1 and 2 mm, preferably between 0.2 and 1.2 mm and most preferably between 0.4 and 0.8 mm;
- a tear-out force of at least 200 N/cm, preferably at least 500 N/cm and most preferably of at least 1000 N/cm;
- in case of a woven fabric:
- 5-25, preferably 7-20 warp threads and/or
- 5-20, preferably 6-15 weft threads.

6. Heat shield according to one of the preceding claims, **characterised in that** the fibre material (4) comprises glass fibres, ceramic fibres, aramide fibres, Kevlar or carbon fibres or blends of these fibres or compounds of these fibres.

7. Heat shield according to one of the preceding claims, **characterised in that** the fibre material (4) is claimed into the edge area (6) of the metallic layer (2) which circumvents the cut-out (3, 5).

8. Heat shield according to claim 7, **characterised in that** the edge area (6) is folded over in S-shape and that the edge area (42) of the fibre material (42) is clamped by the flange (7).

9. Heat shield according to one of claims 1 to 6, **characterised in that** the metallic layer (2) shows several cut-outs (3, 5), which are spanned by one continuous piece of fibre material (4).

10. Heat shield according to one of the preceding claims **characterised in that** it comprises at least one further metallic layer (8) which further metallic layer (8) comprises a cut-out (9) that corresponds with the cut-out (3) in the first metallic layer (2).

11. Heat shield according to claim 10, **characterised in that** the fibre material (4) is clamped in between the two adjacent metallic layers (2, 8).

12. Heat shield according to one of claims 10 or 11, **characterised in that** in the regions without fibre material (4) between the metallic layers (2, 8) it comprises a non-metallic insulating layer (10).

13. Heat shield according to one of the preceding claims, **characterised in that** it comprises at least one through-opening in the fibre material (4).

14. Heat shield according to one of claims 1 to 8 and 10 to 13, **characterised in that** the cut-out is spanned by two sections (54, 64) of flexible fibre material in sections.

15. Use of the heat shield according to one of the preceding claims in engine compartments of vehicles, especially in the area of the exhaust line.

## Revendications

1. Ecran thermique (1) pour la protection d'un composant contre le chaleur et/ou le son avec au moins une couche métallique (2) comportant au moins un passage (3, 5), lequel est recouvert avec du matériau fibreux flexible **caractérisé par le fait que** la couche métallique et l'écran thermique sont déformés en trois dimensions et que la température d'utilisation du matériau fibreux (4) soit entre -50°C et 600°C.

2. L'écran thermique selon la revendication 1, **caractérisé en ce que** le passage est une ouverture (3) passant par au moins une couche métallique (2) ou une niche (5) au niveau du bord (13) d'au moins une couche métallique (2).

3. L'écran thermique selon la revendication 1 ou 2, **caractérisé en ce que** le matériau fibreux est un tissu, un tricot, un maillage ou non-tissé.

4. L'écran thermique selon une des revendications précédentes **caractérisé en ce que** le matériau fibreux sur au moins une de ses surfaces (40, 41) est complètement ou partiellement recouvert d'une couche de métal ou de matière plastique.

5. L'écran thermique selon au moins une des revendications précédentes **caractérisé en ce que** le matériau fibreux possède au moins une des propriétés suivantes:
- un poids surfacique entre 50 et 1500 g/m², préférablement entre 280 et 1300 g/m² et en particulier entre 500 et 900 g/m²;
- une épaisseur entre 0,1 et 2 mm, préférablement entre 0,2 et 1,2 mm, et en particulier entre 0,4 et 0,8 mm,
- Résistance à la rupture d'au moins 200 N/cm, préférablement d'au moins 500 N/cm et en particulier d'au moins 1000 N/cm,
- Dans le cas d'un tissu :
- Entre 5 et 25, préférablement entre 7 et 20, fils enchaîné et/ou
- Entre 5 et 20, préférablement entre 6 et 15, fils de trame.

6. L'écran thermique selon au moins une des revendications précédentes **caractérisé en ce que** le matériau fibreux est constitué de fibres minérales, en particulier des fibres de verre, des fibres céramiques, des fibres d'aramide, des fibres Kevlar ou des fibres de carbone ou de fibres mélangeuses ou du mélange de ces fibres.

7. L'écran thermique selon au moins une des revendications précédentes **caractérisé en ce que** le matériau fibreux est coincé par le bord (6) du passage (3, 5).

8. L'écran thermique selon la revendication 7, **caractérisé en ce que** le bord (6) est rabattu formant un S et **en ce que** le bord (42) du matériau fibreux est coincé par le rembordement (7).

9. L'écran thermique selon une des revendications 1 à 6, **caractérisé en ce que** la couche métallique (2) comporte plusieurs passages (3, 5) tous recouverts par une seule pièce de matériau fibreux.

10. L'écran thermique selon une des revendications précédentes **caractérisé en ce qu'**il comporte un autre couche métallique (8) comportant au moins un passage (9) correspondant au passage (3) de la première couche métallique (2).

11. L'écran thermique selon la revendication 10, **caractérisé en ce que** le matériau fibreux est coincé entre les deux couches métalliques (2, 8).

12. L'écran thermique selon une des revendications 10 ou 11, **caractérisé en ce qu'**il comporte entre les couches métalliques en plus du matériau fibreux (4), et en particulier dans les zones sans matériau fibreux (4), une couche isolante (10).

13. L'écran thermique selon la revendication précédente **caractérisé en ce qu'**il comporte une ouverture (43, 47) dans le matériau fibreux.

14. L'écran thermique selon une des revendications 1 à 8 et 10 à 13, **caractérisé en ce que** le passage (3, 5) est recouvert d'au moins deux pièces (54, 64) de matériau fibreux flexible (4).

15. Utilisation de l'écran thermique selon une des revendications précédentes dans l'espace du moteur de véhicules automobiles, en particulier au niveau de la ligne d'échappement.
